# EUROPÄISCHE PATENTSCHRIFT

(11) **EP 1 142 278 B1**
(45) Veröffentlichungstag und Bekanntmachung des Hinweises auf die Patenterteilung: **12.07.2006**
(21) Anmeldenummer: 00902537.0
(22) Anmeldetag: 05.01.2000
(51) Int. Cl.: H04M 3/00

(54) **SCHALTUNGSANORDNUNG ZUM BILDEN DES ABSCHLUSSES EINER ANALOGEN TEILNEHMERLEITUNG**
CIRCUIT ARRANGEMENT FOR FORMING THE TERMINATION OF AN ANALOGOUS SUBSCRIBER LINE
CIRCUIT FORMANT LA TERMINAISON D'UNE LIGNE D'ABONNE ANALOGIQUE

(30) Priorität: 15.01.1999 DE 19901464
(43) Veröffentlichungstag der Anmeldung: 10.10.2001
(73) Patentinhaber: Infineon Technologies AG, 81669 München (DE)
(72) Erfinder: KAHL, Alexander, A-9500 Villach (AT); HAUPTMANN, Jörg, A-9241 Wernberg (AT)
(74) Vertreter: Reinhard - Skuhra - Weise & Partner
(86) Internationale Anmeldenummer: PCT/DE2000/000046
(87) Internationale Veröffentlichungsnummer: WO 2000/042759

(56) Entgegenhaltungen:
- EP-A- 0 467 367
- US-A- 5 500 894
- US-A- 5 515 434

## Beschreibung

Die Erfindung betrifft eine Schaltungsanordnung zum Bilden des Abschlusses einer analogen Teilnehmerleitung nach dem Oberbegriff von Patentanspruch 1.

Eine Schaltungsanordnung zum teilnehmerseitigen Abschließen einer analogen Teilnehmerleitung (SLIC = Subscriber Line Circuit) bildet für die Teilnehmerleitung eine Abschlußimpedanz sowohl für Wechsel- als auch für Gleichsignale. Dabei wird die Abschlußimpedanz für Gleichsignale (DC-Abschlußimpedanz) und für Wechselsignale (AC-Abschlußimpedanz) an die Teilnehmerleitung geschaltet, wenn eine Verbindung für eine Signalübertragung besteht.

Die DC-Abschlußimpedanz dient dazu, einen Arbeitspunkt der Schaltungsanordnung zum Abschließen der analogen Teilnehmerleitung einzustellen und einer Gegenstelle (z. B. einem Vermittlungsamt) zu signalisieren, daß eine Verbindung besteht. Beim Senden beziehungsweise beim Empfangen von Signalen (z. B. Sprach- oder Datensignalen) wird dann aber über die Teilnehmerleitung fließende Strom um den durch die DC-Abschlußimpedanz eingestellten Arbeitspunkt moduliert. Der Arbeitspunkt hängt dabei von dem über die Teilnehmerleitung fließenden Gleichstrom, der von der Gegenstelle eingespeist wird, sowie von der durch die DC-Abschlußimpedanz eingestellten DC-Charakteristik ab.

Eine Änderung oder Anpassung an läderspezifische Anforderungen der DC- und AC-Abschlußimpedanz ist nur durch eine schaltungstechnische Änderung, beispielsweise Auswechseln von Widerständen, Kondensatoren, etc. möglich.

In der EP 0 467 367 A1 ist eine Teilnehmeranschlußschaltung zum Anschluß einer Teilnehmeranschlußleitung für die Übertragung von analogen Teilnehmersignalen an die Vermittlungsstelle einer digitalen Zeitmultiplex-Fernsprechvermittlungsstelle offenbart. In der Teilnehmerleitungs-Schnittstellenschaltung der Anschlußschaltung ist ein vom Vierdrah-Sendeausgang zum Vierdraht-Empfangseingang führender, Filterelemente enthaltender Mitkopplungspfad gebildet, durch den eine Grundeinstellung der Zweidrahtimpedanz bewirkt wird, die höher ist als die Impedanz der Speisebrücke. Diese Grundeinstellung wird zum geforderten exakten Wert ergänzt mit Hilfe eines programmierbaren Filters, das in einem mit der Schnittstellenschaltung zusammengeschalteten Baustein den Vierdraht-Sendezweig mit Vierdraht-Empfangszweig verbindet und außerdem dafür sorgt, daß die Zweidrahtimpedanz einen komplexen Wert erhält.

Aus der US 5,500,894 ist ein Verfahren und eine Vorrichtung zum Bereitstellen eines Telefoninterfaces bekannt. Das Telefoninterface hat eine wählbare Abschlusscharakteristik.

Das der Erfindung zugrunde liegende technische Problem liegt daher darin, eine Schaltungsanordnung zum Abschließen einer analogen Telnehmerleitung anzugeben, die mit geringem schaltungstechnischen Aufwand eine regelbare AC-Abschlußimpedanz bildet, die programmierbar ist, und wobei die Teilnehmerleitung gleichstromfrei ist.

Dieses Problem wird durch eine Schaltungsanordnung mit den Merkmalen von Patentanspruch 1 gelöst. Vorteilhafte Ausführungsformen der Erfindung ergeben sich aus den jeweiligen Unteransprüchen.

Die Erfindung betrifft eine Schaltungsanordnung zum Bilden des Abschlusses einer analogen Teilnehmerleitung, die einen ersten Anschluß und einen zweiten Anschluß zum Anschließen der zweiadrigen analogen Teilnehmerleitung aufweist. Der erste Anschluß ist über eine Reihenschaltung eines ersten Kondensators, mindestens eines einstellbaren Widerstandes und eines zweiten Kondensators mit dem zweiten Anschluß verbunden. Erfindungsgemäß ist mit dem Verbindungspunkt des ersten Kondensators und des einstellbaren Widerstandes eine Gleichstromquelle verbunden. Die Geleichstromquelle prägt einen Strom ein, der zur Einstellung eines Arbeitspunktes für eine Signalübertragung über die analoge Teilnehmerleitung dient. Aufgrund des ersten und des zweiten Kondensators werden Gleichsignale auf der Teilnehmerleitung abgeblockt, so daß kein Gleichstrom über die analoge Teilnehmerleitung fließen kann. Weiterhin wird über den ersten und den zweiten Kondensator und die einstellbaren Widerstände eine Abschlußimpedanz für Wechselsignale gebildet. Durch die einstellbaren Widerstände ist der Arbeitspunkt für Gleichsignale und die Abschlußimpedanz für Wechselsignale einstellbar.

In einer bevorzugten Ausführungsform wird die Gleichstromquelle durch einen Transistor und einen Widerstand gebildet, wobei die Laststrecke des Transistors mit dem Widerstand in Reihe geschalten ist und der freie Anschluß des Widerstandes mit einer Versorgungsspannung verbunden ist. Der Steueranschluß des Transistors ist über eine Regelschaltung mit dem Verbindungspunkt zwischen der Laststrecke des Transistors und dem Widerstand verbunden.

In einer besonders bevorzugten Ausführungsform weist die Regelschaltung der Gleichstromquelle einen Operationsverstärker auf, der die Spannung am Verbindungspunkt der Laststrecke des Transistors und des Widerstandes mit einer Referenzspannung vergleicht und davon abhängig über seine Ausgangsspannung den Transistor steuert.

Bevorzugt weist die Gleichstromquelle eine Diode auf, die mit der Laststrecke des Transistors in Reihe geschaltet ist. Vorteilhafterweise verhindert die Diode, daß der Transistor durch die hohen Spannungen eines Rufsignales beschädigt wird.

Weitere Vorteile, Merkmale und Anwendungsmöglichkeiten der Erfindung ergeben sich aus der der nachfolgenden Beschreibung von Ausführungsbeispielen in Verbindung mit der Zeichnung. In der Zeichnung zeigt:

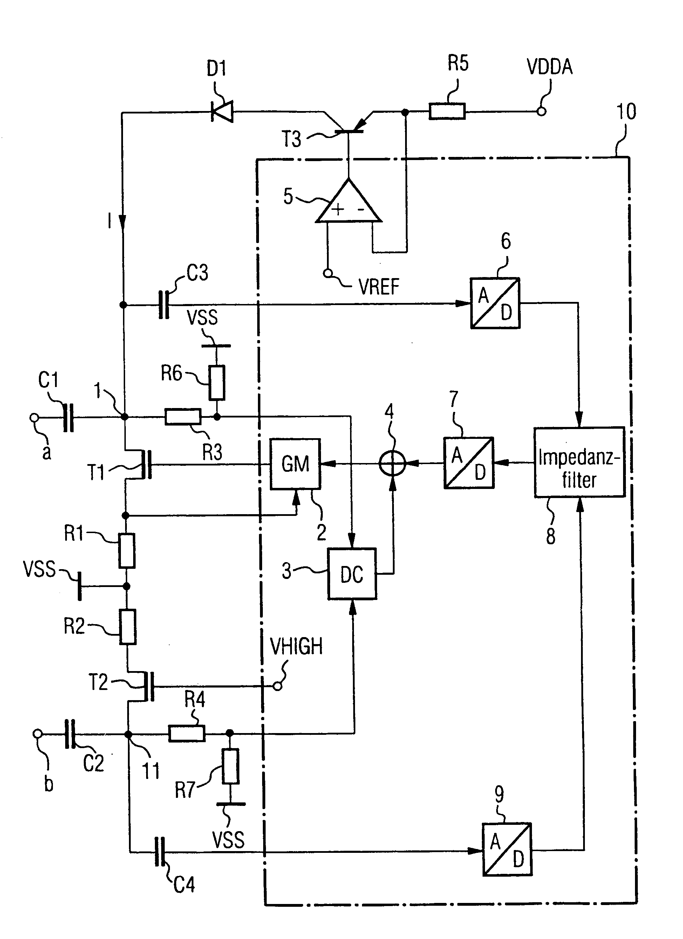

Figur 1 ein Ausführungsbeispiel der Schaltungsanordnung zum Abschließen einer analogen Teilnehmerleitung, das in einem Baustein zur Datenübertragung über eine analoge Teilnehmerleitung eingesetzt wird.

Figur 1 zeigt eine Schaltungsanordnung zum Abschließen einer analogen Teilnehmerleitung, wobei die analoge Teilnehmerleitung zwei Adern aufweist, die mit einem ersten Anschluß a und einem zweiten Anschluß b der Schaltungsanordnung verbindbar sind.

Der erste Anschluß a ist über eine Reihenschaltung eines ersten Kondensators C1, eines ersten n-Kanal-MOSFETs T1 und eines ersten Widerstandes R1 mit einem Bezugspotential VSS verbunden. Der zweite Anschluß b ist über eine Reihenschaltung eines zweiten Kondensators C2, eines zweiten n-Kanal-MOSFETs T2 und eines zweiten Widerstandes R2 mit dem Bezugspotential VSS verbunden. Das Bezugspotential VSS ist bei diesem Ausführungsbeispiel gleich mit dem Nullpotential. Der erste Kondensator C1 und der zweite Kondensator C2 blocken Gleichsignale auf der analogen Teilnehmerleitung ab. In die Schaltungsanordnung fließt somit über die Teilnehmerleitung kein Gleichstrom.

Zur Einstellung eines DC-Arbeitspunktes der Schaltungsanordnung wird am Verbindungspunkt 1 des ersten Kondensators und des ersten n-Kanal-MOSFETs T1 über einen ersten Spannungsteiler R3 und R6 eine Spannung gemessen und einer DC-Arbeitspunktregelschaltung 3 zugeführt. Ferner wird am Verbindungspunkt 11 des zweiten Kondensators C2 und des zweiten n-Kanal-MOSFETs T2 eine Spannung über einen zweiten Spannungsteiler R4 und R7 gemessen und der DC-Arbeitspunktregelschaltung 3 zugeführt. Die DC-Arbeitspunktregelschaltung 3 regelt über eine Addierschaltung 4 und eine analoge Integratorschaltung 2 den Widerstand der Laststrecke des ersten n-Kanal-MOSFETs T1 und damit den DC-Arbeitspunkt der Schaltungsanordnung.

Damit am Verbindungspunkt 1 und Verbindungspunkt 11 meßbare Gleichspannungen auftreten, ist der Verbindungspunkt 1 mit einer Gleichstromquelle verbunden, die eine Strom I eingeprägt. Der Steueranschluß des zweiten n-Kanal-MOSFETs T2 liegt in diesem Betriebszustand auf einem hohen Potential VHIGH, so daß der Widerstand der Laststrecke des zweiten n-Kanal-MOSFETs T2 niederohmig ist.

Die Gleichstromquelle zum Einprägen des Stroms I weist einen pnp-Bipolartransistor T3, einen Widerstand R5 und einen Operationsverstärker 5 auf. Der Widerstand R5 ist einerseits mit einer Versorgungsspannung VDDA und andererseits mit dem Emitter des pnp-Bipolartransistors T3 verbunden. Aus dem Kollektor des pnp-Bipolartransistors T3 fließt der Strom I, der in die Schaltungsanordnung eingeprägt wird. Dem positiven Eingang des Operationsverstärkers 5 wird eine Referenzspannung VREF zugeführt und dem negativen Eingang des Operationsverstärkers 5 wird die Spannung am Emitter des pnp-Bipolartransistors T3 zugeführt. Die Ausgangsspannung des Operationsverstärkers 5 steuert den pnp-Bipolartransistor T3. Mit dem Kollektor des pnp-Bipolartransistors ist weiterhin die Anode einer Diode D1 verbunden. Die Diode D1 dient dazu, den pnp-Bipolartransistor T3 vor Zerstörung durch die hohen Spannungen der Rufsignale zu schützen. Über die Referenzspannung VREF läßt sich der Strom I einstellen.

Eine AC-Abschlußimpedanz für die analoge Teilnehmerleitung wird digital über ein Impedanzfilter 8 eingestellt.

Dazu wird eine Wechselspannung am Verbindungspunkt 1 über einen dritten Kondensator C3 und einen nachgeschalteten Analog-Digital-Umsetzer 6 dem Impedanzfilter 8 zugeführt. Ferner wird eine Wechselspannung am Verbindungspunkt 11 über vierten Kondensator C4 und einen nachgeschalteten zweiten Analog-Digital-Umsetzer 9 dem Impedanzfilter 8 zugeführt. Aus den digitalen Wechselsignalen berechnet das Impedanzfilter 8, das als digitales Filter ausgeführt sein kann, ein zur Einstellung der AC-Abschlußimpedanz erforderliches Signal. Das Signal wird über einen Digital-Analog-Umsetzer 7 in eine analoge Spannung umgesetzt und durch die Addierschaltung 4 mit der Ausgangsspannung der Schaltung zur Einstellung des DC-Arbeitspunktes 3 addiert. Die Ausgangsspannung der Addierschaltung 4 wird der analogen Integratorschaltung 2 zugeführt, die von der zugeführten Spannung eine Spannung am Verbindungspunkt zwischen dem n-Kanal-MOSFET T1 und dem ersten Widerstand R1 subtrahiert und die Differenzspannung integriert.

Sowohl zur Einstellung des DC-Arbeitspunktes als auch der AC-Abschlußimpedanz sind bei dieser Schaltungsanordnung zwei unterschiedliche Pfade zum Einstellen vorgesehen, wobei der erste n-Kanal-MOSFET T1 zur Einstellung der AC-Abschlußimpedanz und des DC-Arbeitspunktes benutzt wird. Da bei dieser Schaltungsanordnung durch den ersten Kondensator C1 und den zweiten Kondensator C2 ein Gleichstrom bzw. eine Gleichspannung auf der Teilnehmerleitung abgeblockt wird, muß die Gleichstromquelle einen Strom I durch den ersten n-Kanal-MOSFET T1, den ersten Widerstand R1, den zweiten Widerstand R2 und den zweiten n-Kanal-MOSFET T2 zur Einstellung des DC-Arbeitspunktes einprägen. Über die DC-Arbeitspunktregelschaltung 3 und den ersten n-Kanal-MOSFET T1 wird dann der Gleichstrom über die Laststrecke des ersten n-Kanal-MOSFETs T1 und damit DC-Arbeitspunkt eingestellt.

## Patentansprüche

1. Schaltungsanordnung zum Bilden des Abschlusses einer analogen Teilnehmerleitung, die einen ersten Anschluß (a) und einen zweiten Anschluß (b) für die Teilnehmerleitung aufweist und wobei der erste Anschluß (a) über eine Reihenschaltung eines ersten Kondensators (C1), mindestens eines einstellbaren Widerstandes (T1, R1, T2, R2) und eines zweiten Kondesators (C2) mit dem zweiten Anschluß (b) verbunden ist, wobei eine Gleichstromquelle (T3, R5, VDDA) mit dem Knotenpunkt (1) zwischen dem ersten Kondensator (C1) und dem einstellbaren Widerstand (T1, R1) verbunden ist.

2. Schaltungsanordnung nach Anspruch 1,
**dadurch gekennzeichnet, daß**
die Gleichstromquelle (T3, R5, VDDA) einen Transistor (T3) und einen Widerstand (R5) aufweist, wobei die Laststrecke des Transistors mit dem Widerstand in Reihe geschaltet ist und wobei der Steueranschluß des Transistors von einer Regelschaltung (5) eingestellt wird.

3. Schaltungsanordnung nach Anspruch 2,
**dadurch gekennzeichnet, daß**
die Regelschaltung einen Operationsverstärker (5) aufweist, dessen Ausgang mit dem Steueranschluß des Transistors (T3) der Gleichstromquelle verbunden ist, dessen negativer Eingang mit dem Verbindungspunkt des Transistors (T3) und des Widerstands (R5) der Gleichstromquelle verbunden ist und an dessen negativen Eingang eine Referenzspannung (VREF) anliegt.

4. Schaltungsanordnung nach Anspruch 2 oder 3,
**dadurch gekennzeichnet, daß**
die Gleichstromquelle eine Diode (D1) aufweist, die mit der Laststrecke des Transistors (T3) in Reihe geschaltet ist.

## Claims

1. Circuit arrangement for forming the termination of an analogue subscriber line comprising a first terminal (a) and a second terminal (b) for the subscriber line, wherein the first terminal (a) is connected via a series connection of a first capacitor (C1), at least one adjustable resistor (T1, R1, T2, R2) and a second capacitor (C2) with the second terminal (b), and wherein a DC current source (T3, R5, VDDA) is connected with a node (1) between the first capacitor (C1) and the adjustable resistor (T1, R1).

2. Circuit arrangement according to claim 1,
**characterized in that**
the DC current source (T3, R5, VDDA) comprises a transistor (T3) and a resistor (R5), wherein the load path of the transistor is connected in series with the resistor and wherein the control terminal of the transistor is adjusted by a control circuit (5).

3. Circuit arrangement according to claim 2,
**characterized in that**
the control circuit comprises an operation amplifier (5), whose output terminal is connected to the control terminal of the transistor (T3) of the DC current source, whose negative input terminal is connected to the point of connection of the transistor (T3) and the resistor (R5), and wherein a reference voltage (VREF) is applied to the negative input terminal of the operation amplifier (5).

4. Circuit arrangement according to claim 2 or 3,
**characterized in that**
the DC current source comprises a diode (D1), which is connected in series with the load path of the transistor (T3).

## Revendications

1. Circuit pour former la fin d'une ligne d'abonné analogique qui comprend une première connexion (a) et une deuxième connexion (b) pour la ligne d'abonné et dans lequel la première connexion (a) est reliée avec la deuxième connexion (b) via un circuit en série d'un premier condensateur (C1), d'au moins une résistance réglable (T1, R1, T2, R2) et d'un deuxième condensateur (C2), une source de courant continu (T3, R5, VDDA) étant reliée avec le noeud (1) entre le premier condensateur (C1) et la résistance réglable (T1, R1).

2. Circuit selon la revendication 1,
**caractérisé en ce que**
la source de courant continu (T3, R5, VDDA) comprend un transistor (T3) et une résistance (R5), le chemin de charge du transistor étant connecté en série avec la résistance et la borne de commande du transistor étant réglée par un circuit de réglage (5).

3. Circuit selon la revendication 2,
**caractérisé en ce que**
le circuit de réglage comprend un amplificateur opérationnel (5) dont la sortie est reliée avec la borne de commande du transistor (T3) de la source de courant continu et dont l'entrée négative est reliée avec le point de liaison du transistor (T3) et de la résistance (R5) de la source de courant continu, une tension de référence (VREF) étant appliquée à son entrée négative.

4. Circuit selon la revendication 2 ou 3,
**caractérisé en ce que**
la source de courant continu comprend une diode (D1) qui est connectée en série avec le chemin de charge du transistor (T3).
